# EUROPEAN PATENT SPECIFICATION

(11) **EP 2 886 315 B1**
(45) Date of publication and mention of the grant of the patent: **11.10.2017**
(21) Application number: 13830547.9
(22) Date of filing: 18.07.2013
(51) Int. Cl.: B29D 30/16, B60C 9/02, B60C 9/08, B60C 13/00, B60C 15/06, B60C 17/00, B60C 15/00, B29D 30/06, B29D 30/12, B29D 30/20

(54) **MANUFACTURING METHOD FOR RUN-FLAT PNEUMATIC TYRE, AND RUN-FLAT PNEUMATIC TYRE**
HERSTELLUNGSVERFAHREN FÜR EINEN LUFTREIFEN MIT NOTLAUFEIGENSCHAFTEN UND LUFTREIFEN MIT NOTLAUFEIGENSCHAFTEN
PROCÉDÉ DE FABRICATION POUR PNEU RUN-FLAT, ET PNEU RUN-FLAT

(30) Priority: 24.08.2012 JP 2012185653
(43) Date of publication of application: 24.06.2015
(73) Proprietor: Sumitomo Rubber Industries, Ltd., Kobe-shi, Hyogo 651-0072 (JP)
(72) Inventor: SUGIYAMA Naoki, Kobe-shi Hyogo 651-0072 (JP)
(74) Representative: Manitz Finsterwald Patentanwälte PartmbB
(86) International application number: PCT/JP2013/069525
(87) International publication number: WO 2014/030470

(56) References cited:
- EP-A1- 1 343 641
- EP-A1- 2 014 452
- EP-A1- 2 481 560
- JP-A- H11 268 151
- JP-A- 2002 533 242
- JP-A- 2006 160 236
- JP-A- 2006 513 920
- JP-A- 2006 514 589
- JP-A- 2009 001 108
- JP-A- 2012 096 656
- JP-A- 2012 106 441
- JP-A- 2013 075 505

## Description

### Technical field

The present invention relates to a manufacturing method for a pneumatic tire having excellent uniformity and the pneumatic tire. The features of the preamble of the independent claims are known from EP 1 343 641 A1. Related technology is known from EP 2 014 452 A1.

### Background art

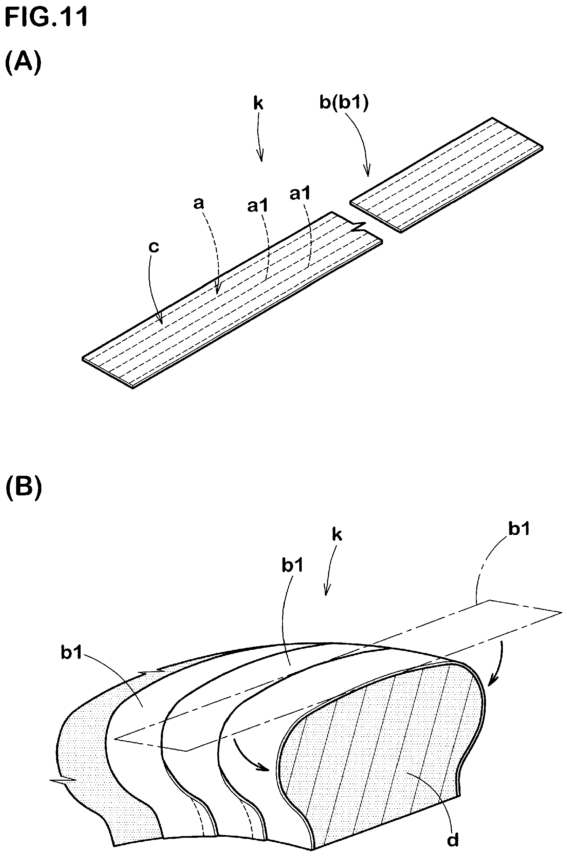

In recent years, a manufacturing method for a pneumatic tire to improve uniformity of the tire has been proposed. In this manufacturing method, for example, as shown in Figure 11(A), a strip-shaped ply piece b1 for forming a carcass ply k as a tire constructional member, and a rigid core d as shown in Figure 11(B) are employed.

The strip-shaped ply piece b1 is obtained by sequentially cutting a long ribbon-shaped ply b along a ply width direction. The ribbon-shaped ply b has an array (a) of a plurality of carcass cords a1 paralleled along the length direction thereof and a topping rubber c coating the array. The rigid core d has an outer shape approximate to, for example, the tire cavity shape of the finished tire.

As shown in Figure 11(B), the ply piece b1 is applied onto the rigid core d continuously in the tire circumferential direction at constant pitches.
The tire (carcass ply) manufactured by such method has the mass which is even in the tire circumferential direction, and possesses excellent uniformity.

However, there is a tendency such that an intermediate elongation rate of a carcass cord a1 varies a little along the length direction due to unevenness of twisting during manufacturing and the like.
In a carcass ply k, in which a strip-shaped ply piece b1 cut out from a ribbon-shaped ply b employing such carcass cords a1 is applied continuously in the tire circumferential direction in the order corresponding to the cutting, the intermediate elongation rates of the carcass cords show variations continuously in the tire circumferential direction.
On the other hand, the first and last two ply pieces, between which the difference in the intermediate elongation rate becomes largest, are disposed adjacently to each other in the tire circumferential direction.
Therefore, in the above-mentioned position of the carcass ply k, a large variation of the intermediate elongation rate occurs, and there is a possibility that the tire uniformity is deteriorated.
There is a relevant art as follows.

### Prior art document

### Patent document

Patent document 1: JP-P2012-106441A

### Summary of the invention

### Problems to be solved by the Invention

The present invention was made with the view to the above-mentioned actual situation, and an object is to provide a manufacturing method for a pneumatic tire which can improve uniformity, and the pneumatic tire manufactured by the manufacturing method.

### Means of solving the Problems

The method and the pneumatic tire of the present invention are defined in the independent claims.

A manufacturing method for a pneumatic tire having a carcass extending from a tread portion to bead portions on both sides through sidewall portions, including
a green tire formation process in which a raw tire is formed by applying tire constructional members including an unvulcanized carcass ply onto an outer surface of a rigid core, and
a vulcanization process in which, within a vulcanization mold, the raw tire is vulcanization molded together with the rigid core, wherein
the green tire formation process includes
a ply piece forming process in which, by sequentially cutting a ribbon-like ply, which is an array of carcass cords paralleled along the length direction and coated with topping rubber, into specific lengths from its leading end,
a plurality of strip-shaped sheet-like first ply pieces are continuously formed, and thereafter,
a plurality of strip-shaped sheet-like second ply pieces are continuously formed, and
a carcass ply forming process in which, by using the first ply pieces and the second ply pieces, the unvulcanized carcass ply is formed,
the carcass ply forming process has
a first step in which, by applying the first ply pieces, in the order corresponding to the cutting, over one round at intervals in the tire circumferential direction,
a first carcass ply part, in which the first ply pieces and first spaced parts are alternated in the tire circumferential direction, is formed, and
a second step in which, successively from the first step, by applying the second ply pieces, in the order corresponding to the cutting, over one round at intervals in the tire circumferential direction,
a second carcass ply part, in which the second ply pieces and second spaced parts are alternated in the tire circumferential direction, is formed,
the second ply pieces are positioned at the first spaced parts,
the second spaced parts are positioned at the first ply pieces,
the second ply pieces are, on the tire equator, not overlapped with the first ply pieces, and
the second ply pieces are, in their radially inner end portions, directly overlapped with the first ply pieces.

In the manufacturing method for a pneumatic tire, it is preferable that widths of the first ply pieces and the second ply pieces are 10 to 50 mm.

A pneumatic tire which is formed by the above-mentioned manufacturing method.

The pneumatic tire is a run-flat tire provided in the sidewall portion with a side-reinforcing rubber layer composed of
an inner side-reinforcing rubber part abutting on the inner surface of the carcass, and
an outer side-reinforcing rubber part abutting on the outer surface of the carcass.

### Effects of the Invention

In the carcass ply forming process of the manufacturing method for a pneumatic tire according to the present invention, the long ribbon-shaped ply is sequentially cut at the specific length from the leading end, whereby a plurality of the first ply pieces are formed.
Thereafter, the ribbon-shaped ply is sequentially cut, and a plurality of the second ply pieces are successively formed. Then, the first ply pieces are sequentially applied onto the rigid core, in the order corresponding to the cutting, over one round at intervals in the tire circumferential direction. Thereafter, the second ply pieces are applied, in the order corresponding to the cutting, at the positions of the first spaced parts between the first ply piece.
Thereby, the first ply pieces and the second ply pieces are applied alternately in the tire circumferential direction. Namely, the ply pieces higher in the intermediate elongation rate and the ply pieces lower in the intermediate elongation rate are disposed alternately in the tire circumferential direction, and
the variations of the intermediate elongation rate are evened in the tire circumferential direction.
Accordingly, uniformity, especially, the radial force variation (RFV) which is a variation of force in the tire radial direction is improved.

In addition, the second ply pieces are not overlapped with the first ply pieces at the tire equator.
Thereby, the length in the tire radial direction, of the pneumatic tire (carcass ply) is evened in the tire circumferential direction.
Accordingly, as the variation in the tire radial direction becomes small, uniformity, especially, free radial run out (FRRO) is improved.

Further, the second ply pieces are, in the inner end portions in the tire radial direction, directly overlapped with the first ply pieces.
Thereby, the first ply pieces are strongly fixed to the second ply pieces, and the tire durability is improved.

### Brief Explanation of the Drawings

[Figure 1]
   A cross sectional view showing an example of a pneumatic tire formed by a manufacturing method for understanding of the present invention.
[Figure 2]
   A cross sectional view illustrating a green tire formation process.
[Figure 3]
   A cross sectional view illustrating a vulcanization process.
[Figure 4]
   A figure conceptually illustrating the manufacturing method according to the present invention.
[Figure 5]
   A perspective view showing a ribbon-like ply piece.
[Figure 6]
   (A), (B) are a cross sectional view and a side view for explaining the first step of the carcass ply forming process.
[Figure 7]
   (A), (B) are a cross sectional view and a side view for explaining the second step of the carcass ply forming process.
[Figure 8]
   A cross sectional view showing the section of the carcass ply at the tire equator by developing it in a linear fashion.
[Figure 9]
   A cross sectional view of the pneumatic tire formed, as a run-flat tire, by the manufacturing method according to the present invention.
[Figure 10]
   (A) is a tire side view showing an order for applying ply pieces in a comparative example;
   (B) is a tire side view showing an order for applying ply pieces in the example.
[Figure 11] (A), (B) are perspective views for explaining the conventional manufacturing method for a pneumatic tire using a rigid core.

### Mode for carrying out the invention

Embodiment of the present invention will now be described in detail.

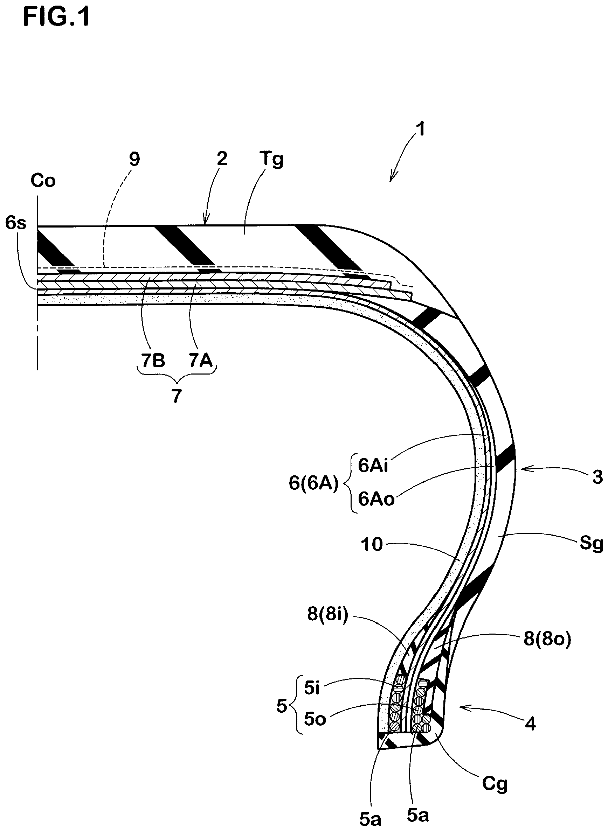

Figure 1 is a cross sectional view showing an example of a pneumatic tire 1.
The pneumatic tire 1 has at least a carcass 6 extending from a tread portion 2 through sidewall portions 3 to bead portions 4 on both sides.
Shown as the pneumatic tire 1 is a passenger radial tire in which a belt layer 7 is disposed outside the carcass 6 in the radial direction and in the tread portion 2.

The carcass 6 is composed of a carcass ply 6A in which organic fiber carcass cords are radially arranged.
The carcass ply 6A is toroidal, extending between the bead portions 4, 4, and its both end portions are not folded around bead cores 5 disposed in the respective bead portions 4.
The bead core 5 has axially inner and outer core pieces 5i, 5o. The both end portions of the carcass ply 6A are sandwiched between the inner and outer core pieces 5i, 5o.

The inner and outer core pieces 5i, 5o are formed by winding a non-extensible bead wire 5a multiple times in the tire circumferential direction.
It is preferable that the outer core piece 5o has a rigidity higher than the inner core piece 5i.
For example, in the outer core piece 5o, the number of turns of the bead wire 5a is for example, 1.2 to 2.0 times that in the inner core piece 5i.
Thereby, the bending rigidity of the bead portion 4 is increased, while restricting the total number of turns of the bead wire 5a. consequently, steering stability and the like are improved.

On the outside of the bead core 5 in the tire radial direction, a tapered bead apex 8 having a rubber hardness of 80 to 100 degrees for example, is disposed in order to increase bead rigidity. The bead apex 8 includes
an outer apex 8o disposed axially outside the carcass 6, and an inner apex 8i disposed axially inside the carcass 6.
In this specification, the rubber hardness is
a durometer A hardness measured at 23 degrees C by the use of a type A durometer according to JIS-K6253.

The belt layer 7 is composed of at least two plies of high modulus belt cords, e.g. steel cords and the like arranged at, for example, about 10 to 35 degrees with respect to the tire circumferential direction.
The belt layer is composed of two radially inner and outer belt plies 7A, 7B.
The belt plies 7A, 7B are arranged so that the belt cords are mutually crossed between the plies, and possess high rigidity. Thereby, the substantially entire width of the tread portion 2 can be stiffly reinforced.

In order to increase the high-speed durability, a band 9 is disposed radially outside the belt layer 7. The band 9 is formed by, for example, spirally winding a band cord, e.g. nylon cord or the like at an angle of not more than 5 degrees with respect to the tire circumferential direction.
A pair of right ad left edge band plies covering only the axial outer edge portions of the belt layer 7 and
a full band ply covering a substantially entire width of the belt layer 7 can be employed alone or in combination as the band 9. The band 9 is made up of a single full band ply.

On the inside of the carcass 6, a thin inner liner 10 forming the tire inner surface is disposed.
In the inner liner 10, air-impermeable rubber, for example, butyl rubber, halogenated butyl rubber and the like is employed in order to retain air filled in the tire cavity.

On the axially outside of the carcass 6, a sidewall rubber Sg forming the outer surface of the sidewall portion 3 is disposed.
On the radially outside of the band 9, a tread rubber Tg forming the outer surface of the tread portion 2 is disposed.
Further, a clinch rubber Cg is disposed radially inside and axially outside the bead core 5.

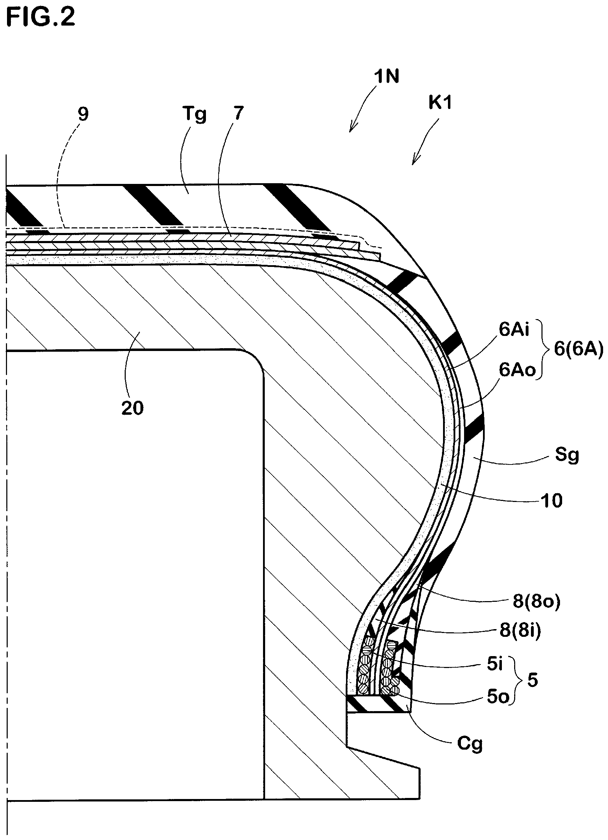

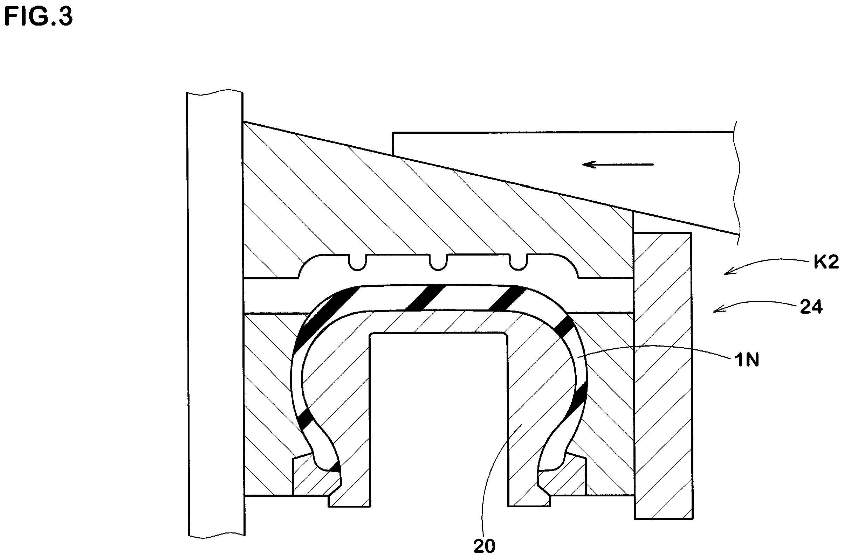

Next, a manufacturing method for the above-mentioned pneumatic tire 1 will be described.
This manufacturing method includes a green tire formation process K1 shown in Figure 2 and a vulcanization process K2 shown in Figure 3.
In the green tire formation process K1, a raw tire 1N is formed by applying unvulcanized tire constructional members sequentially onto the outer surface of the rigid core 20.
In the vulcanization process K2, the raw tire 1N is vulcanization molded within a vulcanization mold 24 together with the rigid core 20.

For example, the green tire formation process K1 includes
an inner liner forming process for applying a member forming the inner liner 10 onto the rigid core 20,
a carcass forming process for applying a member forming the carcass 6,
a bead core forming process for applying a member forming the bead core 5,
a bead apex forming process for applying a member forming the bead apex 8,
a belt forming process for applying a member forming the belt layer 7,
a band forming process for applying a member forming the band 9,
a sidewall forming process for applying a member forming the sidewall rubber Sg,
a tread forming process for applying a member forming the tread rubber Tg and the like.
The rigid core 20 has an outer shape which substantially coincides with the tire cavity shape of the pneumatic tire 1.

As for the other processes of the green tire formation process K1 than the carcass forming process and the vulcanization process K2, it is possible to arbitrarily employ known manufacturing techniques utilizing a rigid core 20.
In this specification, accordingly, only the carcass forming process is explained hereunder.

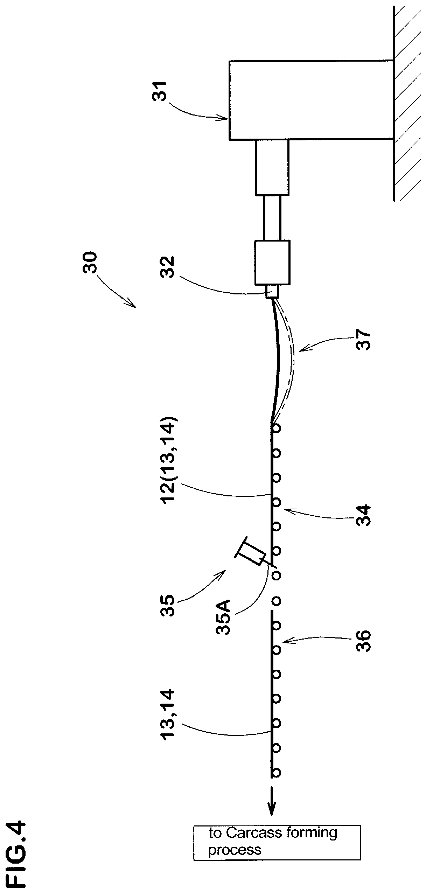

As shown in Figure 4, the carcass forming process includes a ply piece forming process for forming a plurality of strip-shaped sheet-like first ply pieces 13 and second ply pieces 14 by cutting a long ribbon-shaped ply 12, and
a carcass ply forming process for forming an unvulcanized carcass ply 6A by the use of the first and second ply pieces 13, 14.

In Figure 4, shown is a ply piece forming apparatus 30 for use in the ply piece forming process.
For example, as shown in Figure 4, the ply piece forming apparatus 30 includes
a rubber extruder 31 for extruding the unvulcanized ribbon-shaped ply 12,
a first conveyor 34 for receiving the ribbon-shaped ply 12 from the rubber extruder 31 and conveying toward the downstream side at a specific conveying speed,
a cutter 35 for cutting the ribbon-shaped ply 12 into specific lengths, and
a second conveyor 36 for conveying the cut-out ribbon-shaped plies 12 to the rigid core 20.

For example, the rubber extruder 31 is of a screw type, and has a nozzle die 32 for extruding the ribbon-shaped ply 12 in a specific shape.
As the first conveyor 34 and the second conveyor 36, for example, roller conveyors are employed.
As the cutter 35, for example, that having a cutting blade 35A, e.g. ultrasonic cutter or the like is employed.

The ply piece forming apparatus 30 is further provided with an accumulator section 37.
In order to maintain the shape of the ribbon-shaped ply 12 by absorbing the difference between the motion (inclusive of speed and timing) of the ribbon-shaped ply 12 on the upstream side and the motion on the downstream side,
the accumulator section 37 can temporarily accumulate the ribbon-shaped ply 12 between the rubber extruder 31 and the first conveyor 34 by slacking it in a u shape.

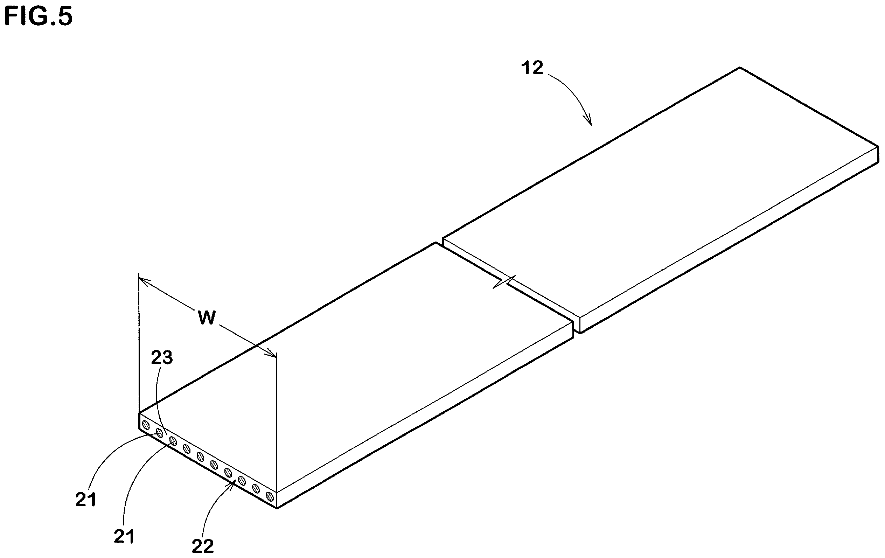

In Figure 5, a perspective view of the ribbon-shaped ply 12 is shown.
As shown in Figure 5, the ribbon-shaped ply 12 is long and sheet-like, and includes an array 22 of the carcass cords 21 paralleled along the length direction, and a topping rubber 23 coating the array.

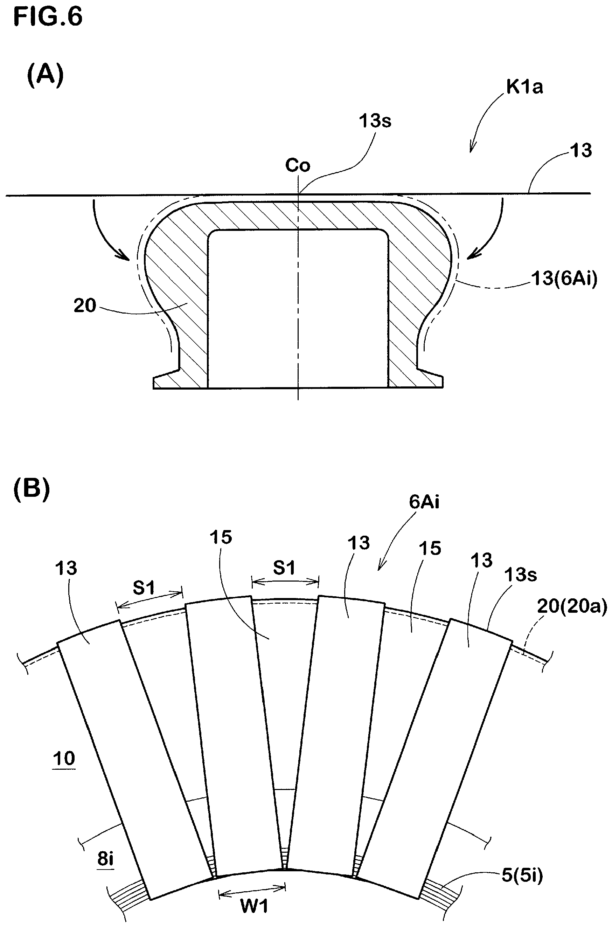

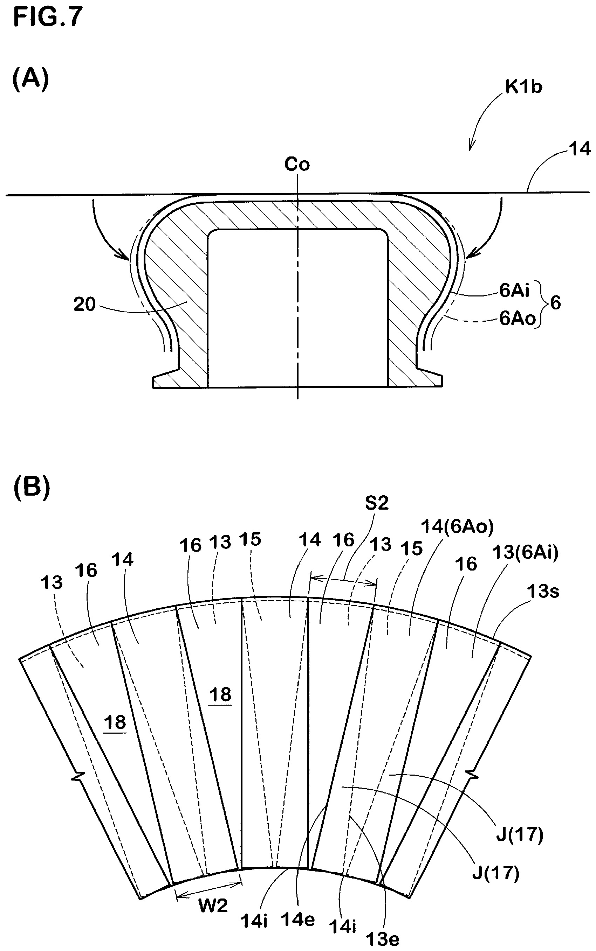

The ribbon-shaped ply 12 being conveyed by the first conveyor 34 is sequentially cut along the ply-width direction into specific lengths from the leading end in the conveying direction by the use of the cutter 35.
Thereby, a plurality of strip-shaped sheet-like first ply pieces 13 are continuously formed.
Thereafter, the ribbon-shaped ply 12 is sequentially cut along the ply-width direction into specific lengths from the leading end in the conveying direction by the use of the cutter 35. Thereby, a plurality of strip-shaped sheet-like second ply pieces 14 are continuously formed in succession.
As the first ply pieces 13 and the second ply pieces 14 are formed from one ribbon-shaped ply 12 as explained above, the ply widths W1 (shown in Figure 6) and W2 (shown in Figure 7) of the first and second ply pieces 13, 14 are the same as the ply width W of the ribbon-shaped ply 12.

Next, the carcass ply forming process is carried out. The carcass ply forming process is illustrated in Figure 6 and Figure 7.
The carcass ply forming process is made up of a first step K1a (shown in Figure 6) and a second step K1b (shown in Figure 7). Prior to the carcass ply forming process, the inner liner 10, the inner core piece 5i and the inner apex 8i are applied on the outer surface of the rigid core 20 as shown in Figure 6(B).

First, in the first step K1a, as shown in Figure 6(A), the first ply pieces 13 are sequentially applied, in the order corresponding to the cutting, on the rigid core 20 over one round at intervals in the tire circumferential direction. Thereby, a first carcass ply part 6Ai, in which the first ply pieces 13 alternate with first spaced parts 15 in the tire circumferential direction, is formed.
As shown in Figure 6(B), the length S1 in the tire circumferential direction of the first spaced part 15 becomes maximum at the position 13s of the outer end in the tire radial direction of the first ply piece 13, and gradually decreases toward the inside in the radial direction.

The second step K1b is carried out in succession to the first step K1a as shown in Figure 7(A).
In the second step K1b, the second ply pieces 14 are sequentially applied, in the order corresponding to the cutting, on the rigid core 20, over one round at intervals in the tire circumferential direction.
Thereby, a second carcass ply part 6Ao, in which the second ply pieces 14 alternate with second spaced parts 16 in the tire circumferential direction, is formed.
The length S2 in the tire circumferential direction of the second spaced part 16 becomes maximum at the position of the tire equator Co, and gradually decreases toward the inside in the radial direction.

As shown in Figure 7(B), at the positions 13s of the outer ends in the tire radial direction of the first ply pieces 13, the second ply pieces 14 of the second carcass ply part 6Ao are positioned at the first spaced parts 15, and the second spaced parts 16 are positioned at the first ply pieces 13.

In the ply piece forming process in the present invention, a plurality of the first ply pieces 13 and a plurality of the second ply pieces 14 are continuously formed from the ribbon-shaped ply 12.
In the carcass ply forming process, the first ply pieces 13 are applied onto the rigid core 20.
Then, in succession thereto, the second ply pieces 14 are applied in the order corresponding to the cutting.
Thereby, the manufacturing time is short.
Further, as the first ply pieces 13 are positioned at the second spaced parts 16, and the second ply pieces 14 are positioned at the first spaced parts 15, the first ply pieces 13 and the second ply pieces 14 are applied alternately in the tire circumferential direction with no space therebetween in the tread portion 2.
Thereby, the ply pieces with higher intermediate elongation rates alternate with the ply pieces with lower intermediate elongation rates, and
variations of the intermediate elongation rate are evened in the tire circumferential direction.
Accordingly, uniformity, especially, the radial force variation (RFV), which is variation of force in the tire radial direction, is improved.

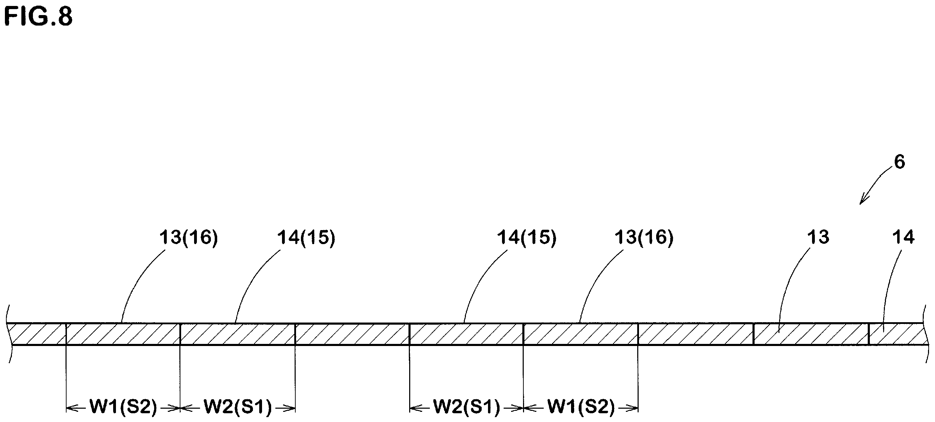

In Figure 8, the section of the carcass ply 6A at the tire equator Co is shown by developing it in a linear fashion. As shown in Figure 8, at the tire equator Co, the lengths S1 of the first spaced parts 15 are equal to the ply widths W2 of the second ply pieces 14. Further, the lengths S2 of the second spaced parts 16 are equal to the ply widths W1 of the first ply pieces 13.
Accordingly, at the tire equator C, the second ply pieces 14 are not overlapped with the first ply pieces 13.
Thereby, at the position 6s of the outer end in the tire radial direction of the carcass ply 6A at the tire equator Co (shown in Figure 1), consequently, at the tire equator Co of the pneumatic tire, the tire radius is evened in the tire circumferential direction.
As the variation in the tire radial direction is decreased accordingly, uniformity, especially free radial run out (FRRO) are improved.

As shown in Figure 7(B), inner end portions 14i in the tire radial direction of the second ply pieces 14 are provided with overlap portions J overlapped with side edge portions 13e of the first ply pieces 13 in the circumferential direction as being inside and outside in the axial direction.
Namely, in the carcass ply 6A, there are alternately formed two-layered parts 17 defined by the overlap portions J and single-layered parts 18 between the overlap portions J, J.
Thereby, the first ply pieces are strongly fixed to the second ply pieces, and the tire durability is improved.

As the two-layered parts 17 extend inward and outward in the radial direction like ribs, rigidity in the tire radial direction and torsional rigidity in the circumferential direction are effectively increased.
Further, as the single-layered part 18 and the two-layered parts 17 appear alternately in the tire circumferential direction, the sidewall outer surface is corrugated, which can prevent a cut from spreading circumferentially at a moment.
Therefore, the pneumatic tire 1 manufactured by the manufacturing method is improved in the durability.

It is preferable that the ply widths W1, W2 (shown in Figure 8) of the respective ply pieces 13, 14
are in the range of 10 to 50 mm, for example.
If the ply widths W1, W2 are small,
the number of the ply pieces 13, 14 is increased,
which requires a longer time for the application and invites a decrease in the production efficiency.
In contrast, if more than 50 mm, wrinkles become liable to occur during application, and there is a possibility that the production efficiency and the uniformity are deteriorated. Therefore, it is especially preferable that the ply widths W1, W2 are 20 to 40 mm.

As to the carcass cords 21, organic fiber cords, e.g. PET (polyethylene terephthalate), PEN (polyethylene naphthalate), rayon, nylon, aramid and the like are suitably used.

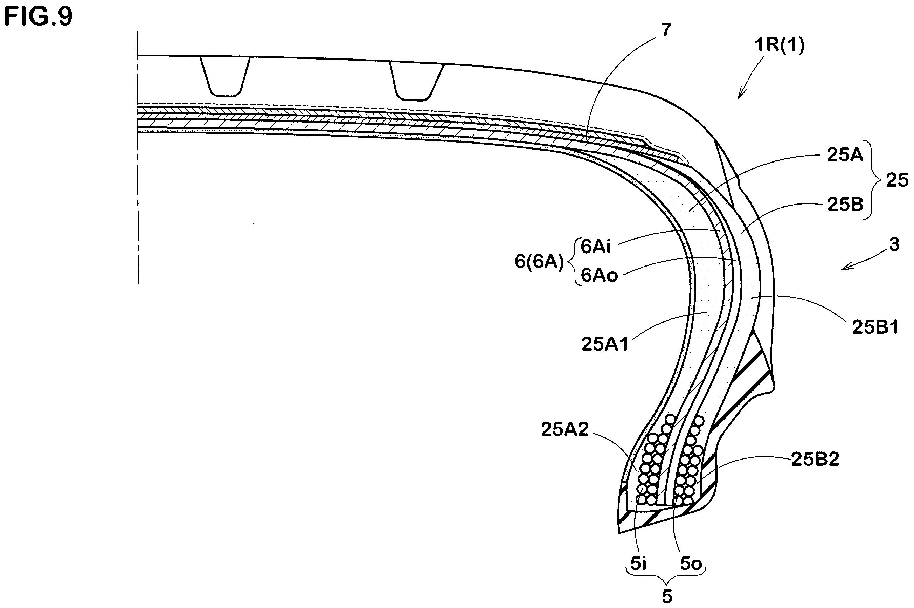

In Figure 9, shown is a cross sectional view of an embodiment of the pneumatic tire 1 which is a run-flat tire 1R. The run-flat tire 1R is provided in the sidewall portion 3 with a side-reinforcing rubber layer 25.

The side-reinforcing rubber layer 25 in this embodiment includes an inner side-reinforcing rubber part 25A abutting on the inner surface of the carcass 6, and an outer side-reinforcing rubber part 25B abutting on the outer surface of the carcass 6.

The inner side-reinforcing rubber part 25A has a main portion 25A1 rising from the inner core piece 5i.
The main portion 25A1 in this embodiment has a substantially crescent cross section extending inward and outward in the radial direction from a central portion having a maximum thickness, while gradually decreasing the thickness.
For example, an outer edge portion in the radial direction, of the main portion 25A1 is positioned axially inside the outer end of the belt layer 7.
In this embodiment, a sub portion 25A2 covering the inner core piece 5i is connected to an inner edge portion in the radial direction, of the main portion 25A1.

The outer side-reinforcing rubber part 25B has a main portion 25B1 rising from the outer core piece 5o.
The main portion 25B1 in this embodiment has an outside part extending outward in the radial direction from a central portion having a maximum thickness while gradually decreasing the thickness, and
an inside part extending inward in the radial direction from the central portion while maintaining a substantially constant thickness or gradually decreasing the thickness.
In this embodiment, an outer edge portion in the radial direction, of the main portion 25B1 is positioned axially inside the outer end of the belt layer 7 and axially outside the outer edge portion in the radial direction, of the main portion 25A1. In this embodiment, a sub portion 25B2 covering the outer core piece 5o is connected to an inner end portion in the radial direction, of the main portion 25B1.

Such side-reinforcing rubber layer 25 restricts the motion of the carcass 6 by sandwiching the carcass 6 between the inner and outer side-reinforcing rubber parts 25A, 25B, therefore, it is possible to effectively increase the tire's side rigidity. Therefore, the steering stability and durability during run-flat operation are significantly improved.
The tire 1R in this embodiment is not provided with a tapered bead apex 8 made of hard rubber. Therefore, the side rigidity is evened, and partial deformation during run-flat operation is controlled, and the run-flat durability is further improved. Further, as the sub portions 25A2, 25B2 are provided, the bead core 5 and the side-reinforcing rubber layer 25 are integrated, and the side rigidity is increased over a wider range.

Preferably, the rubber hardnesses of the inner and outer side-reinforcing rubber parts 25A, 25B are less than the above-mentioned bead apex 8, and a rubber having a hardness of 60 to 85 degrees is suitably employed.
The maximum thickness for the inner and outer side-reinforcing rubber parts 25A, 25B depends on the tire size and category. In the case of a passenger tire, a range of 2 to 10 mm is preferred. In this embodiment, the maximum thickness of the inner side-reinforcing rubber part 25A is more than the maximum thickness of the outer side-reinforcing rubber part 25B.

In this embodiment, the same rubber composition is used for the inner side-reinforcing rubber part 25A and the outer side-reinforcing rubber part 25B, but they may be differed from each other.
For either one or both of the inner and outer side-reinforcing rubber parts 25A, 25B, a short fiber reinforced rubber with short fiber mixed in the rubber may be employed.
As to the short fiber, organic fiber, e.g. nylon, polyester, aromatic polyamide, rayon, VINYLON, cotton, cellulosic resin, crystalline polybutadiene and the like, as well as inorganic fiber, e.g. metal fiber, whisker, boron, glass fiber and the like may be cited. These may be employed alone or as a combination of two or more kinds.

In a manufacturing method for the run-flat tire 1R, in advance of the first step K1a in the carcass forming process, a process in which a member for forming the inner side-reinforcing rubber part 25A is applied onto the rigid core 20 is carried out, and
after the second step K1b, a process in which a member for forming the outer side-reinforcing rubber part 25B is applied onto the outside of the a second carcass ply part 6Ao is carried out.

while description has been made of one particularly preferable embodiment of the present invention, the present invention can be carried out by modifying into various embodiments without being limited to the illustrated embodiment.

### Example

Passenger tires (tire size 215/45R17) having the structure shown in Figure 1 were manufactured by the use of the rigid core, and each tire was tested for the uniformity.

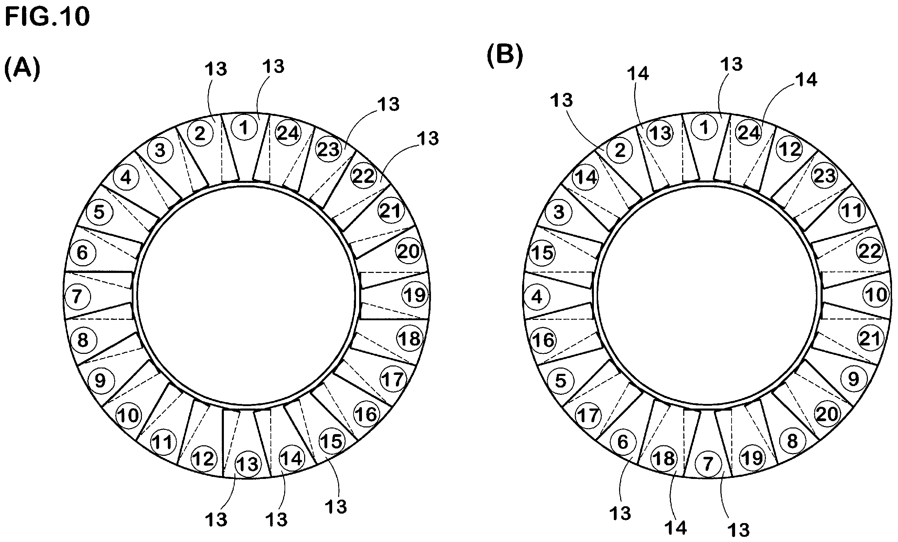

In Figure 10(A), the order of application of the ply pieces in a comparative example is shown.
In Figure 10(B), the order of application of the first and second ply pieces in an example is shown.
The encircled numbers in Figures 10(A) and 10(B) indicate the order of cutting of the ply pieces and the order of applying thereof.
In the comparative example, the ply pieces were arranged, in the order of cutting, continuously in the tire circumferential direction without making the spaced parts.
Common specifications of the plies and test method were as follows.

### < Ply piece >

ply width: 30 mm
ply thickness: 1.2 mm
number and diameter of carcass cords: rayon, 0.76 mm
number of carcass cords: 20

### < uniformity >

For each tire, fifty samples were measured for low-speed RFV according to JASO C607: 2000 "TEST PROCEDURES FOR AUTOMOBILE TIRE UNIFORMITY", and the average value was obtained.
The results are indicated by an index based on the average value of the comparative example 1 being 100. The smaller value means the better uniformity.
The tire measuring conditions are as follows.
wheel rim size: 8.0X17
inner pressure: 200 kPa
vertical load: 4.0 kN
tire revolution speed: 60 rpm

**Table 1**

| | Comparative example | Example |
|---|---|---|
| Figure illustrating application of strip ply pieces | Fiqure 10(A) | Fiqure 10(B) |
| Uniformity (RFV) [smaller index value is better] | 100 | 92 |

As shown in Table 1, it was confirmed that Example tire was highly improved in the uniformity in comparison with comparative example tire,
Further tests were made by changing the tire size and the shape of the ply piece, which gave the same result as of Table 1.

### Description of the signs

- 1: pneumatic tire
- 6A: carcass ply
- 12: ribbon-shaped ply
- 13: first ply piece
- 14: second ply piece
- 14i: radially inner end portion of second ply piece
- 20: rigid core
- Co: tire equator

## Claims

1. A run-flat pneumatic tire (1R) having
a carcass (6) extending from a tread portion (2) to bead portions (4) on both sides through sidewall portions (3),
a side-reinforcing rubber layer (25) disposed in each sidewall portion (3), and
bead cores (5) disposed in the respective bead portions (4),
wherein the carcass (6) includes
a first carcass ply part (6Ai), in which first ply pieces (13) and first spaced parts (15) are alternated in the tire circumferential direction; and
a second carcass ply part (6Ao), in which second ply pieces (14) and second spaced parts (16) are alternated in the tire circumferential direction,
wherein the second ply pieces (14) are positioned at the first spaced parts (15) and the second spaced parts (16) are positioned at the first ply pieces (13), the second ply pieces (14) are, on the tire equator (Co), not overlapped with the first ply pieces (13), and the second ply pieces (14) are, in their radially inner end portions (14i), directly overlapped with the first ply pieces (13),
**characterized in that**
the side-reinforcing rubber layer (25) includes
an inner side-reinforcing rubber part (25A) abutting on the inner surface of the carcass (6), and
an outer side-reinforcing rubber part (25B) abutting on the outer surface of the carcass (6).

2. The run-flat pneumatic tire of claim 1, wherein
each bead core (5) has an axially inner core piece (5i) and an axially outer core piece (5o),
wherein
each end portion of the carcass ply (6A) of the carcass (6) is sandwiched between the axially inner core pieces(5i) and the axially outer core piece (5o),
wherein
the inner side-reinforcing rubber part (25A) has a main portion (25A1) rising from the inner core piece (5i) and a sub portion (25A2) covering the inner core piece (5i) connected to an inner edge portion in the radial direction of the main portion (25A1), and
the outer side-reinforcing rubber part (25B) has a main portion (25B1) rising from the outer core piece (5o) and a sub portion (25B2) covering the outer core piece (5o) connected to an inner edge portion in the radial direction of the main portion (25B1).

3. A manufacturing method for the run-flat pneumatic tire (1R) of claim 1 or 2, including
a green tire formation process (K1) in which a raw tire (1N) is formed by applying tire constructional members including an unvulcanized carcass ply onto an outer surface of a rigid core (20), and
a vulcanization process (K2) in which, within a vulcanization mold (24), the raw tire (1N) is vulcanization molded together with the rigid core (20),
wherein
the green tire formation process (K1) includes
a ply piece forming process in which, by sequentially cutting a ribbon-like ply (12), which is an array (22) of carcass cords (21) paralleled along the length direction and coated with topping rubber (23), into specific lengths from its leading end,
a plurality of strip-shaped sheet-like first ply pieces (13) are continuously formed, and thereafter,
a plurality of strip-shaped sheet-like second ply pieces (14) are continuously formed, and
a carcass ply forming process in which, by using the first ply pieces (13) and the second ply pieces (14), the unvulcanized carcass ply is formed,
the carcass ply forming process has
a first step (K1a) in which, by applying the first ply pieces (13), in the order corresponding to the cutting, over one round at intervals in the tire circumferential direction,
a first carcass ply part (6Ai), in which the first ply pieces (13) and first spaced parts (15) are alternated in the tire circumferential direction, is formed, and
a second step (K1b) in which, successively from the first step (K1a), by applying the second ply pieces (14), in the order corresponding to the cutting, over one round at intervals in the tire circumferential direction,
a second carcass ply part (6Ao), in which the second ply pieces (14) and second spaced parts (16) are alternated in the tire circumferential direction, is formed,
wherein
the second ply pieces (14) are positioned at the first spaced parts (15),
the second spaced parts (16) are positioned at the first ply pieces (13),
the second ply pieces (14) are, on the tire equator (Co), not overlapped with the first ply pieces (13), and
the second ply pieces (14) are, in their radially inner end portions (14i), directly overlapped with the first ply pieces (13), **characterized in that** the method further includes:
a process in which a member for forming the inner side-reinforcing rubber part (25A) is applied onto the rigid core (20) in advance of the first step (K1a), and
a process in which a member for forming the outer side-reinforcing rubber part (25B) is applied onto the outside of the second carcass ply part (6Ao) after the second step (K1b).

4. A manufacturing method for a pneumatic tire according to claim 3, wherein widths (W1,W2) of the first ply pieces (13) and the second ply pieces (14) are 10 to 50 mm.

## Patentansprüche

1. Notlauf-Luftreifen (1 R) mit
einer Karkasse (6), die sich von einem Laufflächenabschnitt (2) zu Wulstabschnitten (4) auf beiden Seiten durch Seitenwandabschnitte (3) erstreckt,
einer Seitenverstärkungs-Kautschukschicht (25), die in jedem Seitenwandabschnitt (3) angeordnet ist, und
Wulstkernen (5), die in den jeweiligen Wulstabschnitten (4) angeordnet sind,
wobei die Karkasse (6) umfasst
einen ersten Karkasslagenteil (6Ai), in welchem erste Lagenstücke (13) und erste beabstandete Teile (15) sich in der Reifenumfangsrichtung abwechseln, und
einen zweiten Karkasslagenteil (6Ao), in welchem zweite Lagenstücke (14) und zweite beabstandete Teile (16) sich in der Reifenumfangsrichtung abwechseln,
wobei die zweiten Lagenstücke (14) an den ersten beabstandeten Teilen (15) angeordnet sind, und die zweiten beabstandeten Teile (16) an den ersten Lagenstücken (13) angeordnet sind, die zweiten Lagenstücke (14) auf dem Reifenäquator (Co) die ersten Lagenstücke (13) nicht überlappen, und die zweiten Lagenstücke (14) in ihren radial inneren Endabschnitten (14i) die ersten Lagenstücke (13) direkt überlappen,
**dadurch gekennzeichnet, dass**
die Seitenverstärkungs-Kautschukschicht (25)
einen inneren Seitenverstärkungs-Kautschukteil (25A), der an der Innenfläche der Karkasse (6) anliegt, und
einen äußeren Seitenverstärkungs-Kautschukteil (25B), der an der Außenfläche der Karkasse (6) anliegt, umfasst.

2. Notlauf-Luftreifen nach Anspruch 1, wobei
jeder Wulstkern (5) ein axial inneres Kernstück (5i) und ein axial äußeres Kernstück (5o) aufweist,
wobei
ein jeder Endabschnitt der Karkasslage (6A) der Karkasse (6) zwischen dem axial inneren Kernstück (5i) und dem axial äußeren Kernstück (5o) angeordnet ist,
wobei
der innere Seitenverstärkungs-Kautschukteil (25A) einen Hauptabschnitt (25A1) aufweist, der von dem inneren Kernstück (5i) ansteigt, und einen Unterabschnitt (25A2), der das innere Kernstück (5i) bedeckt und mit einem inneren Randabschnitt in der radialen Richtung des Hauptabschnitts (25A1) verbunden ist, und
der äußere Seitenverstärkungs-Kautschukteil (25B) einen Hauptabschnitt (25B1) aufweist, der von dem äußeren Kernstück (5o) ansteigt, und einen Unterabschnitt (25B2), der das äußere Kernstück (5o) bedeckt und mit einem inneren Randabschnitt in der radialen Richtung des Hauptabschnitts (25B1) verbunden ist.

3. Herstellungsverfahren für den Notlauf-Luftreifen (1R) nach Anspruch 1 oder 2, umfassend
einen Rohreifen-Bildungsprozess (K1), in welchem ein Rohreifen (1N) gebildet wird, indem Reifenkonstruktionselemente, die eine unvulkanisierte Karkasslage umfassen, auf eine Außenfläche eines starren Kerns (20) aufgelegt werden, und
einen Vulkanisationsprozess (K2), in welchem innerhalb einer Vulkanisationsform (24) der Rohreifen (1N) zusammen mit dem starren Kern (20) vulkanisationsgeformt wird,
wobei
der Rohreifen-Bildungsprozess (K1) umfasst
einen Lagenstück-Bildungsprozess, in welchem durch aufeinanderfolgendes Schneiden einer bandartigen Lage (12), die eine Anordnung (22) von Karkasskorden (21) ist, die parallel entlang der Längsrichtung gelegt sind und mit Gummierungskautschuk (23) beschichtet sind, in spezifische Längen von ihrem vorderen Ende aus,
kontinuierlich eine Mehrzahl von streifenförmigen, bahnartigen ersten Lagenstücken (13) gebildet wird, und danach
kontinuierlich eine Mehrzahl von streifenförmigen, bahnartigen zweiten Lagenstücken (14) gebildet wird, und
einen Karkasslagen-Bildungsprozess, in welchen unter Verwendung der ersten Lagenstücke (13) und der zweiten Lagenstücke (14) die unvulkanisierte Karkasslage gebildet wird,
wobei der Karkasslagen-Bildungsprozess aufweist
einen ersten Schritt (K1 a), in welchem durch Auflegen der ersten Lagenstücke (13) in der dem Schneiden entsprechenden Reihenfolge über eine Runde in Intervallen in der Reifenumfangsrichtung ein erster Karkasslagenteil (6Ai), in welchem sich die ersten Lagenstücke (13) und die ersten beabstandeten Teile (15) in der Reifenumfangsrichtung abwechseln, gebildet wird, und
einen zweiten Schritt (K1b), in welchem dem Schritt (K1a) folgend durch Auflegen der zweiten Lagenstücke (14) in der dem Schneiden entsprechenden Reihenfolge über eine Runde in Intervallen in der Reifenumfangsrichtung ein zweiter Karkasslagenteil (6Ao), in welchem sich die zweiten Lagenstücke (14) und die zweiten beabstandeten Teile (16) in der Reifenumfangsrichtung abwechseln, gebildet wird,
wobei
die zweiten Lagenstücke (14) an den ersten beabstandeten Teilen (15) angeordnet werden,
die zweiten beabstandeten Teile (16) an den ersten Lagenstücken (13) angeordnet werden,
die zweiten Lagenstücke (14) auf dem Reifenäquator (Co) die ersten Lagenstücke (13) nicht überlappen, und
die zweiten Lagenstücke (14) in ihren radial inneren Endabschnitten (14i) die ersten Lagenstücke (13) direkt überlappen,
**dadurch gekennzeichnet, dass**
das Verfahren ferner umfasst:
einen Prozess, in welchem ein Element zum Bilden des inneren Seitenverstärkungs-Kautschukteils (25A) vor dem ersten Schritt (K1 a) auf den starren Kern (20) aufgelegt wird, und
einen Prozess, in welchem ein Element zum Bilden des äußeren Seitenverstärkungs-Kautschukteils (25B) nach dem zweiten Schritt (K1b) auf die Außenseite des zweiten Karkasslagenteils (6Ao) aufgelegt wird.

4. Herstellungsverfahren für einen Luftreifen nach Anspruch 3, wobei Breiten (W1, W2) der ersten Lagenstücke (13) und der zweiten Lagenstücke (14) 10 bis 50 mm betragen.

## Revendications

1. Bandage pneumatique pour roulage à plat (1R) ayant
une carcasse (6) s'étendant depuis une portion formant bande de roulement (2) jusqu'à des portions de talons (4) sur les deux côtés via des portions de parois latérales (3),
une couche de caoutchouc de renforcement latéral (25) disposée dans chaque portion de paroi latérale (3), et
des âmes de talons (5) disposées dans les portions de talons respectives (4),
dans lequel la carcasse (6) inclut
une partie formant première nappe de carcasse (6Ai), dans laquelle des morceaux de première nappe (13) et des premières parties espacées (15) sont alterné(e)s dans la direction circonférentielle du pneumatique ; et
une partie formant seconde nappe de carcasse (6Ao), dans laquelle des morceaux de seconde nappe (14) et des secondes parties espacées (16) sont alterné(e)s dans la direction circonférentielle du pneumatique,
dans lequel les morceaux de seconde nappe (14) sont positionnés au niveau des premières parties espacées (15) et les secondes parties espacées (16) sont positionnées au niveau des morceaux de première nappe (13), les morceaux de seconde nappe (14) ne sont pas, sur l'équateur de pneumatique (Co), en chevauchement avec les morceaux de première nappe (13), et les morceaux de seconde nappe (14) sont, dans leur portion terminale radialement intérieure (14i), directement en chevauchement avec les morceaux de première nappe (13),
**caractérisé en ce que**
la couche de caoutchouc de renforcement latéral (25) inclut
une partie de caoutchouc de renforcement latéral intérieure (25A) en butée sur la surface intérieure de la carcasse (6), et
une partie de caoutchouc de renforcement latéral extérieure (25B) en butée sur la surface extérieure de la carcasse (6).

2. Bandage pneumatique pour roulage à plat selon la revendication 1, dans lequel
chaque âme de talon (5) comprend un morceau d'âme axialement intérieur (5i) et un morceau d'âme axialement extérieur (5o),
dans lequel
chaque portion terminale de la nappe de carcasse (6A) de la carcasse (6) est prise en sandwich entre le morceau d'âme axialement intérieur (5i) et le morceau d'âme axialement extérieur (5o),
dans lequel
la partie de caoutchouc de renforcement latéral intérieure (25A) a une portion principale (25A) qui monte depuis le morceau d'âme intérieur (5i) et une sous-portion (25A2) couvrant le morceau d'âme intérieur (5i) connectée à une portion de bordure intérieure dans la direction radiale de la portion principale (25A1), et
la partie de caoutchouc de renforcement latéral extérieure (25B) a une portion principale (25B1) qui monte depuis le morceau d'âme extérieur (5o) et une sous-portion (25B2) couvrant le morceau d'âme extérieur (5o) connectée à une portion de bordure intérieure dans la direction radiale de la portion principale (25B1).

3. Procédé de fabrication pour le bandage pneumatique pour roulage à plat (1R) selon la revendication 1 ou 2, incluant
un processus de formation de pneumatique "vert" (K1) dans lequel un pneumatique cru (1N) est formé en appliquant des éléments structurels du pneumatique incluant une nappe de carcasse non vulcanisée sur une surface extérieure d'un noyau rigide, et
un processus de vulcanisation (K2) dans lequel, à l'intérieur d'un moule de vulcanisation (24), le pneumatique cru (1N) est moulé avec vulcanisation conjointement avec le noyau rigide (20),
dans lequel
le processus de formation de pneumatique vert (K) inclut
un processus de formation de morceau de nappe dans lequel, en découpant de façon séquentielle une nappe (12) semblable à un ruban, qui est un arrangement (22) de câblés de carcasse (21) mis en parallèle le long de la direction en longueur et revêtu avec un caoutchouc d'enrobage (23), en longueurs spécifiques depuis son extrémité de tête,
une pluralité de morceaux de première nappe (13) en forme de ruban semblables à une feuille sont formés en continu, et ensuite
une pluralité de morceaux de seconde nappe (14) en forme de ruban semblables à une feuille sont formés en continu, et
un processus de formation de nappe de carcasse dans lequel, en utilisant les morceaux de première nappe (13) et les morceaux de seconde nappe (14), on forme la nappe de carcasse non vulcanisée,
le processus de formation de nappe de carcasse comprend
une première étape (K1 a) dans laquelle, en appliquant les morceaux de première nappe (13), dans l'ordre correspondant à la découpe, sur un tour à intervalles dans la direction circonférentielle du pneumatique, on forme une première partie de nappe de carcasse (6Ai), dans laquelle les morceaux de première nappe (13) et des premières parties espacées (15) sont alternées dans la direction circonférentielle du pneumatique, et
une seconde étape (K1 b) dans laquelle, en succession à la première étape (Ka), en appliquant les morceaux de seconde nappe (14), dans l'ordre correspondant à la découpe, sur un tour à intervalles dans la direction circonférentielle du pneumatique, on forme une seconde partie de nappe de carcasse (6Ao), dans laquelle les seconds morceaux de nappe (14) et des secondes parties espacées (16) sont alternées dans la direction circonférentielle du pneumatique,
dans lequel
les morceaux de seconde nappe (14) sont positionnés au niveau des premières parties espacées (15),
les secondes parties espacées (16) sont positionnées au niveau des morceaux de première nappe (13),
les morceaux de seconde nappe (14) ne sont pas, sur l'équateur de pneumatique (Co), en chevauchement avec les morceaux de première nappe (13), et
les morceaux de seconde nappe (14) sont, dans leur portion terminale (14i) radialement intérieure, directement en chevauchement avec les morceaux de première nappe (13),
**caractérisé en ce que** le procédé inclut en outre :
un processus dans lequel un élément destiné à former la partie de caoutchouc de renforcement latéral intérieure (25A) est appliqué contre le noyau rigide (20) à l'avance de la première étape (K1 a), et
un processus dans lequel un élément destiné à former la partie de caoutchouc de renforcement latéral extérieure (25B) est appliqué sur l'extérieur de la seconde partie de nappe de carcasse (6Ao) après la seconde étape (Kb).

4. Procédé de fabrication pour un bandage pneumatique selon la revendication 3, dans lequel les largeurs (W 1, W2) des morceaux de première nappe (13) et des morceaux de seconde nappe (14) sont de 10 à 50 millimètres.
